## Europäisches Patentamt

## European Patent Office

## Office européen des brevets

(19)

(11) Veröffentlichungsnummer: **0 201 834**
**B1**

(12) **EUROPÄISCHE PATENTSCHRIFT**

(45) Veröffentlichungstag der Patentschrift:
**12.07.89**

(51) Int. Cl.⁴: **F16M 11/24**

(21) Anmeldenummer: **86106130.7**

(22) Anmeldetag: **05.05.86**

(54) **Trageinrichtung mit stufenlos verstellbaren Auslegern.**

(30) Priorität: **13.05.85  CH 2036/85**

(43) Veröffentlichungstag der Anmeldung:
**20.11.86 Patentblatt 86/47**

(45) Bekanntmachung des Hinweises auf die Patenterteilung:
**12.07.89 Patentblatt 89/28**

(84) Benannte Vertragsstaaten:
**AT BE DE FR GB IT NL**

(56) Entgegenhaltungen:
**AT-B- 217 177**
**DE-A- 2 120 655**
**DE-B- 2 004 220**
**DE-C- 733 572**
**US-A- 4 278 224**

(73) Patentinhaber: **Fehlbaum & Co., Unterdorfstrasse 21,
CH-4143 Dornach(CH)**

(72) Erfinder: **Walter, Herbert, Im Zehtgarten 13,
D-7840 Müllheim(DE)**

(74) Vertreter: **Gehrig, Peter et al, A. Braun, Braun, Héritier,
Eschmann AG Holbeinstrasse 36-38, CH-4051 Basel(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Trageinrichtung mit an einer Polygon-, Rund- oder Oval-Stützsäule stufenlos höhenverstellbaren Ausleger-Anschlussvorrichtungen nach dem Oberbegriff des Patentanspruches 1.

Es ist bekannt, Säulen-Trageinrichtungen mit Auslegern zu versehen, die mit in Ausnehmungen oder Hinterschneidungen an den Säulen eingreifende Haken versehen sind. Säulen dieser Art weisen demgemäss eine Struktur auf, die sie als Trageelement für eine vorbestimmte Art von Ausleger-Ankupplungseinrichtungen festlegen, welche in der Regel nur in einem vorgegebenen Rastermass einsetzbar sind. Ausserdem müssen die Ausnehmungen oder Hinterschneidungen über mindestens einen erheblichen Teil der Säulenlänge und z.B. bei Polygonprofilen auf mehreren Seitenflächen angebracht sein, um die Verwendbarkeit der Säule optimal zu gestalten. Die Verwendung von Rund- oder Ovalprofilen fällt praktisch aus. Obschon Trageinrichtungen dieser Art sehr stabil und hoch belastbar gestaltbar sind, resultiert ein Nachteil: Das Aussehen der Säulen leidet durch die Strukturelemente namentlich in Ausstellungs- oder Verkaufsräumen, wo möglichst wenig technische Details sichtbar sein sollen.

Solche Ausleger-Trageinrichtungen benützen Säulenelemente ohne Durchbrechungen und Auslegerbefestigungen, die sich zweckmässig ohne Werkzeug von der Säule lösen lassen. Eine solche Säulen-Trageinrichtung, bei welcher das Ausleger-Tragelement durch Federkraft an einer Rechteck-Klemmpartie an einer Säulenoberfläche eingreift, ist in der US-A 4 278 224 beschrieben. Weil bei einem solchen Ausleger-Tragelement der Eingriff an der Säule unabhängig von der Auslegerlast stets gleich gross bleibt, führt bereits eine kurzzeitige Überbelastung zum Abgleiten des Tragelementes an der Säule.

In der AT-B 217 177 ist eine in der Höhe beliebig einstellbare Ausleger-Anschlusseinrichtung gezeigt, bei welcher eine offene Hakenschlaufe am oberen Ende eines Konsolelementes eine Rundrohr-Stützsäule partiell umgreift. Das untere Ende der Konsole dagegen steht nur in Stützauflageverbindung mit der Säulenoberfläche. Zwar vermögen solche Konsolelemente bei steigender Auslegerbelastung eine Steigerung des Krafteingriffes an der Säule zu erzeugen, dennoch können Streckkräfte an der Hakenschlaufe zum Lockern des Konsoleingriffes führen, was wiederum zum Abgleiten der Ausleger-Anschlusseinrichtung längs der Säule führt.

Die Aufgabe der Erfindung besteht somit darin, eine Trageinrichtung der eingangs erwähnten Art zu schaffen, bei der sowohl an Polygon- als auch an Rund- oder Oval-Profilsäulen aus Rohr- oder Vollmaterial, Ausleger durch einfachen Keileingriff und somit in der Höhe stufenlos verstellbar aufsetzbar sind. Die Gestaltung der Säule bzw. Säulen in einem Säulen-Verband und der Anschlussvorrichtung soll so sein, dass die/der Ausleger seitlich anlegbar und in verschiedenen gegenseitigen Winkelstellungen an einer Säule anbringbar ist/sind.

Die Lösung dieser Aufgabe ist durch den Patentanspruch 1 definiert. Dieser Anspruch definiert eine Trageinrichtung mit einer Ausleger-Anschlussvorrichtung, bei der ein Klemmfutter eine Stützsäule auf etwa ¾ ihres Umfanges umgreift und eine seitliche Durchtrittsöffnung freilässt, durch welche hindurch die Ausleger-Anschlussvorrichtung an die Säule ansetzbar ist. Ein Teil des Klemmfutters ist als kanalförmiger Klemmkeilkäfig gestaltet, in welchen ein in Achsrichtung der Stützsäule längsbeweglicher Spannkeil gelagert ist.

Der Vorteil dieser Konstruktion besteht darin, dass die in beliebigen Höhenlagen einer Stützsäule ansetzbare Ausleger-Anschlussvorrichtung durch einfaches Anheben von der Stützsäule lösbar ist und wahlweise an einer andern Stelle der Säule verankerbar, oder von dieser abnehmbar ist.

Die Erfindung ist nachstehend anhand der Zeichnung beispielsweise erläutert. Darin zeigt:

Fig. 1 eine Ausführungsform der Trageinrichtung von der Öffnungsseite der Ausleger-Anschlussvorrichtung her bzw. von hinten gesehen,

Fig. 1A die Anschlussvorrichtung der Ausführungsform nach Fig. 1 in einer um 90° gedrehten Anschlussposition (Rückenansicht) an derselben Tragsäule,

Fig. 2 einen Schnitt nach der Linie II–II in Fig. 1,

Fig. 3 eine Ansichtsdarstellung der Tragvorrichtung von unten mit zwei Auslegern an derselben Tragsäule, wobei zwei Ausleger um 90° gegeneinander aufgesetzt sind, und

Fig. 4 und 5 je eine Schnittdarstellung ähnlich der Fig. 2 für eine Rundrohr- und eine Ovalrohr-Ausführungsform der Trageinrichtung.

An einer in der Zeichnung als 4-kant-Rohr gezeigten Säule 1 greift eine Ausleger-Anschlussvorrichtung 2 in der Art einer Keilhalterung ein. Die Anschlussvorrichtung 2 besteht im wesentlichen aus einem im Querschnitt etwa C-förmigen Klemmfutter 3, das von den vier Seitenflächen des 4-kant-Rohres drei umgreift, und einem Spannkeil 4, der in Säulen-Längsrichtung verschiebbar, innerhalb eines nach oben enger werdenden kanalförmigen Spannkeil-Käfigs 5 gefangen ist. Der Käfig 5 ist einstückig mit dem Klemmfutter 3 verbunden. Letzteres weist eine stirnseitige Tragwand 3.1 auf, an welcher über einen integral angeformten Stechzapfen 6 ein rohrförmiger Auslegerarm 7 aufgesetzt ist. Mit der Tragwand 3.1 ist eine (rückwärtige) Klemmplatte 3.2 verbunden, welche zusammen mit der Tragwand 3.1 und einem an dieser Säulen-einwärts angebogenen Führungssteg 8 von 2 bis 4 mm Breite ein im Querschnitt L-förmiges Halteglied der Anschlussvorrichtung 2 bilden. Der Führungssteg 8 bildet zusammen mit der Klemmplatte 3.2 eine Zentrierzone, durch welche das Klemmfutter 3 auf die Säulenlängsachse ausgerichtet wird.

Der der Tragwand 3.1 gegenüberliegend an der Klemmplatte 3.2 angeschlossene Spannkeil-Käfig 5 begrenzt eine an der Anschlussvorrichtung 2 vorgesehene, in Säulenlängsrichtung laufende seitliche Oeffnung 9, deren Längsränder durch die Endkanten des Käfigs 5 und des Führungssteges 8 ausgebildet sind. Sie verlaufen im wesentlichen parallel zueinander und in einem gegenseitigen Abstand, der um etwa 3 bis 5 mm breiter ist als die Breite des Säulenprofils. Damit ist sichergestellt, dass bei leicht nach unten ausgeschobenem Spannkeil 4 die Anschlussvorrichtung 2 von der Seite her über die Säule 1 angelegt und nach erneutem Anheben des Spannkeils 4 der Auslegerarm 7 mit einer Last P belegt werden kann.

Die zulässige Last P hängt ausser von der Säulen- und Auslegerdimensionierung wesentlich von der Grösse des Reibungseingriffs zwischen der Säule 1 und der Ausleger-Anschlussvorrichtung 2 ab. Die bezügliche Reibungskraft wird allein durch den Spannkeil 4 aufgebracht. Bei einem Keilwinkel von 8-15°, einer Keillänge von ca. 6 cm und etwa 2 cm Säulenbreite sind Belastungen P von bis zu 50 kg in Säulennähe bei Tragvorrichtungen für die Kleiderkonfektionspräsentierung realistisch. Hiezu reicht ein Kunststoff-Spannkeil 4 von u-förmigem Querschnitt und trogförmiger Gestalt (beide Längsenden verschlossen) und etwa 1,5 bis 1,8 cm Breite aus. Um den initialen Reibungsgriff zu erhöhen, ist es zweckmässig, die der Säule 1 zugewandte Keilfläche 10 mit einem elastischen Belag 11 zu versehen. Dieser ist zweckmässig ein Gummistreifen, der in einer (nicht gezeigten) Vertiefung des Spannkeils 4 eingebettet ist.

Um den Spannkeil 4 unverlierbar im Käfig 5 längsverschiebbar zu halten, ist ein nietförmiges Sicherungsteil 12 vorgesehen, dessen Schaft einen Längsschlitz 13 in der die Basis des Spannkeil-Käfigs 5 bildenden Käfig-Rückwand 5.1 durchsetzt und in einem Befestigungsauge 14 am Spannkeil 4 verankert ist. Der Kopf des nietförmigen Sicherungsteils 12 ragt über die Käfig-Rückwand 5.1 heraus und ist als Griffelement für die Verschiebung des Spannkeils 4 gestaltbar.

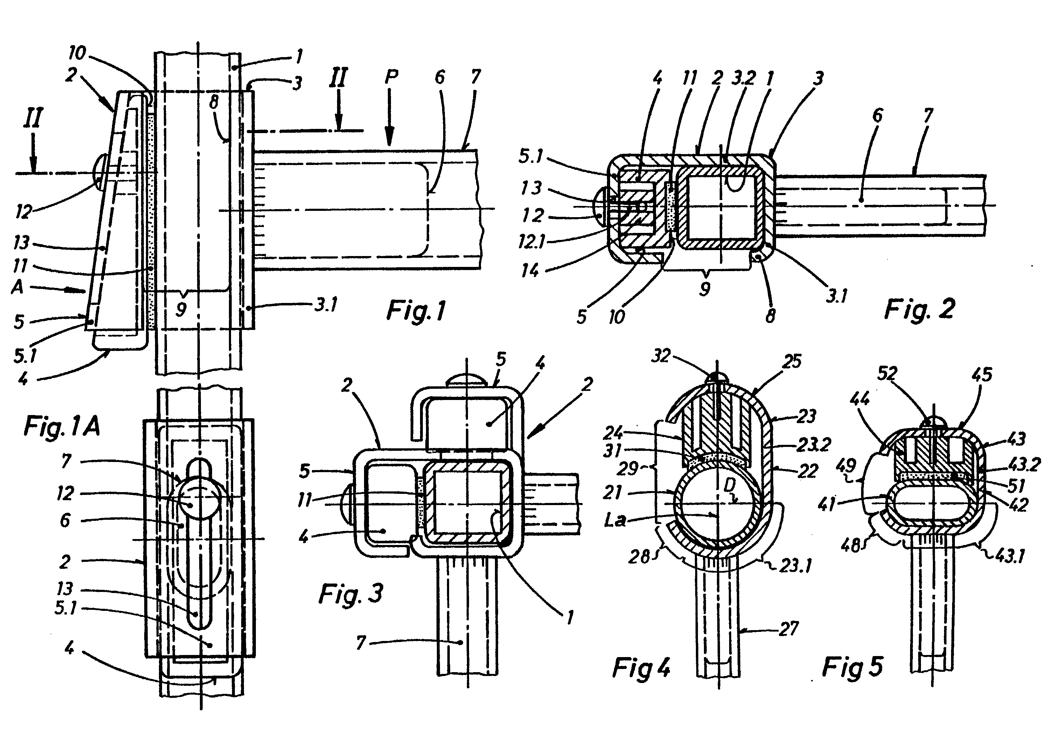

In Fig. 3 ist gezeigt, wie die mit Auslegerarmen 7 versehenen Ausleger-Anschlussvorrichtungen 2 in verschiedenen Stellungen bezüglich des Säulenquerschnittes anbringbar sind. Es versteht sich, dass an einer freistehenden, von allen Seiten zugänglichen Säule 1 Auslegervorrichtungen 2 an allen Säulenlängsflächen gleichzeitig in unterschiedlichen Höhenlagen anbringbar sind.

Wie die Fig. 4 und 5 zeigen, ist die Trageinrichtung nicht nur zusammen mit 4-kant-Säulen verwendbar. In Fig. 4 ist in gleicher Schnittlage wie Fig. 2 eine Rundrohr-Stützsäule 21 gezeigt. Die Ausleger-Anschlussvorrichtung 22 enthält ein Klemmfutter 23, dessen stirnseitige Tragwand 23.1 zusammen mit dem als Führungssteg 28 benennbaren Endabschnitt kontinuierlich der Säulenoberfläche bis zur Durchmesserlinie D folgt, die senkrecht zur Längsachse La des Auslegerarms 27 steht. Der wie in Fig. 2 mit einem elastischen Belag 31 versehene Spannkeil 24 sitzt in einem Spannkeil-Käfig 25, der mit dem gleichen Radius wie die Tragwand 23.1 gebogen, oder gemäss Fig. 2 rechtwinklig angeformt sein kann. Die Verbindung zwischen der Tragwand 23.1 und dem Spannkeil-Käfig 25 erfolgt über eine Klemmplatte 23.2. Mit 29 ist die seitliche, durchlaufende Oeffnung bezeichnet, die sich vom freien Ende des Spannkeil-Käfigs 25 bis zum freien Ende des Führungssteges 28 erstreckt und - nach Ausschieben des Spannkeils 24 - das seitliche Ansetzen und Wegnehmen der Ausleger-Anschlussvorrichtung 22 an die bzw. von der Stützsäule 21 ermöglicht. Die Schiebebefestigung 32 des Spannkeils 24 und der Keilwinkel kann, gleich wie in den Fig. 1 und 2 gezeigt, gestaltet werden.

Aus Fig. 5 ist die Gestaltung der Trageinrichtung mit einem Ovalrohr als Stützsäule 41 ersichtlich. Die Ausleger-Anschlussvorrichtung 42 enthält ein Klemmfutter 43, dessen stirnseitige Tragwand 43.1 im wesentlichen die zugewandte Breitseite des Ovalprofils umgreift. Der, wie in Fig. 2, mit einem elastischen Belag 51 versehene Spannkeil 44 sitzt in einem Spannkeil-Käfig 45, dessen Basiskontur im wesentlichen symmetrisch zur Tragwand 43.1 gebogen, oder gemäss Fig. 2 rechtwinklig angeformt sein kann. Die Verbindung zwischen der Tragwand 43.1 und dem Spannkeil-Käfig 45 erfolgt über eine Klemmplatte 43.2.

Mit 49 ist die seitliche, durchlaufende Oeffnung bezeichnet, die sich vom freien End des Spannkeil-Käfigs 45 bis zum freien Ende des Führungssteges 48 erstreckt. Ihre Breite ist so gewählt, dass nach Ausschieben des Spannkeils 44 das seitliche Ansetzen und Wegnehmen der Ausleger-Anschlussvorrichtung 42 an die bzw. von der Sützsäule 41 mit ausreichend Spiel erfolgen kann. Die Schiebebefestigung 52 des Spannkeils 44 und der Keilwinkel kann, gleich wie in den Fig. 1 und 2 gezeigt, gestaltet sein.

**Patentansprüche**

1. Trageinrichtung mit an einer Polygon-, Rund- oder Oval-Stützsäule (1) stufenlos höhenverstellbaren Ausleger-Anschlussvorrichtung (2) in der Art einer längs der Stützsäule verschiebbaren Keilhalterung mit einem die Stützsäule auf drei Seiten umgreifenden Klemmfutter (3), das eine seitliche Durchtrittsöffnung für das seitliche Anlegen der Ausleger-Anschlussvorrichtung an die Stützsäule aufweist, dadurch gekennzeichnet, dass das Klemmfutter (3) eine sich über die Breite eines ersten Säulen-Seitenabschnittes erstreckende, zur Aufnahme des Auslegerarms (7) bestimmte Tragwand (3.1), eine sich von der Tragwand aus über einen, an den ersten Säulen-Seitenabschnitt anschliessenden zweiten Säulen-Seitenabschnitt erstreckende Klemmplatte (3.2) und einen an diese Platte anschliessenden kanalförmig gestalteten Klemmkeilkäfig (5) aufweist, welcher sich über einen dritten Säulen-Seitenabschnitt erstreckt und an der Stützsäule dem ersten Seitenabschnitt im wesentlichen diametral gegenüberliegt, wobei der Käfiggrund eine gegenüber dem dritten Säulenabschnitt von unten nach oben konvergierende Rückwand (5.1) als Anschlagfläche für einen sich von unten nach oben verjüngenden Spannkeil (4) bildet.

2. Trageinrichtung nach Anspruch 1, dadurch gekennzeichnet, dass die Tragwand (3.1) des Klemmfutters (3) mit einem Führungssteg (8) zum Ausrichten der Ausleger-Anschlussvorrichtung an der Stützsäule (1) versehen ist.

## Claims

1. Supporting apparatus with extension arm connecting devices (2) which are continuously adjustable on a polygonal, round of oval suport stand (1), of the nature of a wedge-type holding device displaceable along the support stand, with a chuck (3) which surrounds the support stand on three sides and which has a side passage to enable the extension arm connection device to be placed against the support stand, characterized by the fact that the chuck (3) has a supporting wall (3.1), which extends over the width of a first lateral section of the stand and serves to accommodate the extension arm (7), a clamp plate (3.2) which extends from the supporting wall via a second lateral section of the stand immediately following the first lateral section of the stand, and a channel-shaped clamp wedge cage (5) which follows the said plate and which extends over a third lateral section of the stand which on the support stand is located in the main diametrically opposite the first lateral section, the base cf the cage having a rear wall (5.1) which converges from the bottom upwards in relation to the third lateral section of the stand and which serves a stop face for a clamping wedge 4 tapering from the bottom upwards.

2. Supporting device in accordance with Claim 1, characterized by the fact that the supporting wall (3.1) of the chuck (3) is provided with a guide ridge (8) to enable the extension arm connecting device to be aligned to the support stand (1).

## Revendications

1. Support muni de dispositifs de solidarisation (2) à bras en porte à faux réglables continûment en hauteur sur une colonne de soutien (1) polygonale, ronde ou ovale, à la manière d'un système de retenue cunéiforme pouvant coulisser le long de cette colonne de soutien, présentant une armature de serrage (3) qui ceinture la colonne de soutien sur trois côtés, et est percée d'une ouverture latérale de passage en vue de l'installation latérale du dispositif de solidarisation à bras en porte à faux sur la colonne de soutien, caractérisé par le fait que l'armature de serrage (3) comprend une paroi de support (3.1) destinée à recevoir le bras (7) en porte à faux et s'étendant sur la largeur d'un premier tronçon latéral de la colonne, une plaque de serrage (3.2) s'étendant, à partir de la paroi de support, sur un deuxième tronçon latéral de la colonne situé dans la continuité directe du premier tronçon latéral de cette colonne, et une cage (5) qui renferme un coin de serrage, se raccorde à cette plaque, est réalisée en forme de canal, s'étend sur un troisième tronçon latéral de la colonne et occupe substantiellement, sur la colonne de soutien, une position diamétralement opposée au premier tronçon latéral, le fond de la cage formant une paroi postérieure (5.1) qui converge de bas en haut par rapport au troisième tronçon de la colonne, et fait office de surface de butée pour un coin de blocage (4) se rétrécissant de bas en haut.

2. Support selon la revendication 1, caractérisé par le fait que la paroi de support (3.1) de l'armature de serrage (3) est pourvue d'une membrure de guidage (8), en vue de l'alignement du dispositif de solidarisation à bras en porte à faux sur la colonne de soutien (1).

Fig. 1

Fig. 1A

Fig. 2

Fig. 3

Fig 4

Fig 5

EP 0 201 834 B1